# EUROPEAN PATENT APPLICATION

(11) **EP 4 818 255 A1**
(43) Date of publication of application: **07.10.2026**
(21) Application number: 26165375.2
(22) Date of filing: 17.03.2026
(51) Int. Cl.: C08L 55/04, C08C 19/02, C08F 293/00, C08L 53/02

(54) **HYDROGENATED BLOCK COPOLYMERS AS COMPATIBILIZERS**

(30) Priority: 18.03.2025 US 202563773513 P
(71) Applicant: Kraton Corporation, The Woodlands Texas 77380 (US); Regents of the University of Minnesota, Minneapolis, MN 55455 (US)
(72) Inventor: ELLISON, Christopher J., Minneapolis, 55455 (US); BATES, Frank S., Minneapolis, 55455 (US); CUI, Shuquan, Minneapolis, 55455 (US); BHATTACHARYA, Aparajita, Houston, 77084 (US); BENING, Robert, Houston, 77084 (US)
(74) Representative: Henkel & Partner mbB

(57) **Abstract**

A hydrogenated block copolymer is disclosed represented by a structure (EB-EB')ₙX, X is a residue of a coupling agent, and n is an integer from 2 to 20. Each block EB and block EB' independently consists essentially of ethylene ("E") units and butylene ("B") units. The block EB has a butylene ("B") unit content of 10 to 30 wt.%, and the block EB' has a butylene ("B") unit content of at least 70 wt.%. The hydrogenated block copolymer has a number average molecular weight (Mn) of 150 - 400 kg/mol, a melting temperature (Tm) of < 110°C, and a dissolution temperature (Ts) of < 70°C. The hydrogenated block copolymer can be used as a compatibilizer for polyolefin blends, exhibiting improved mechanical properties and processability.

## Description

### TECHNICAL FIELD

The disclosure relates to hydrogenated block copolymers, methods of preparation, and applications thereof as compatibilizers.

### BACKGROUND

Thermoplastic polymers such as polyethylene (PE) and isotactic polypropylene (iPP) are among the most widely produced polyolefins, accounting for a large portion of global plastic production and plastic waste streams. Mixed PE/iPP waste poses a challenge for recycling due to their immiscibility, which leads to poor interfacial adhesion and inferior mechanical properties. While melt blending is a potential recycling strategy, phase separation between PE and iPP limits its effectiveness.

Current compatibilizers, such as hydrogenated polybutadiene-derived block copolymers, can improve toughness but often require high melting or dissolution temperatures (e.g., Tm > 100°C) for processing. This can increase energy consumption and processing complexity, creating barriers to industrial implementation. Alternative approaches, including graft copolymers or multiblock copolymers, can also improve compatibility between polyolefins but may require relatively high loadings (e.g., >10 wt.%) to achieve comparable improvements in mechanical properties.

Accordingly, there remains a need for compatibilizers that can effectively compatibilize blends of two or more polyolefins while improving processability and enabling processing at lower temperatures.

### SUMMARY

In a first aspect, the disclosure relates to a hydrogenated block copolymer represented by a structure (EB-EB')ₙX. X is a residue of a coupling agent, and n is an integer from 2 to 20. Each block EB and block EB' independently consist essentially of ethylene units and butylene units. Block EB contains 1-10 ethyl branches derived from hydrogenated 1,2-addition units of butadiene per 100 backbone carbon atoms. The block EB has a butylene unit content of 10 to 30 wt.%, and the block EB' has a butylene unit content of at least 70 wt.%. The hydrogenated block copolymer has a number average molecular weight (Mn) of 150 - 400 kg/mol, a melting temperature (Tm) of < 110°C, and a dissolution temperature (Ts) of < 70°C.

In a second aspect, the hydrogenated block copolymer having the structure (EB-EB')ₙX with n = 2, and the hydrogenated block copolymer is a hydrogenated triblock copolymer having a structure EB-EB'-EB.

In a third aspect, the hydrogenated triblock copolymer has a weight ratio of block EB to block EB' ranging from 5:1 to 1:1.

In a fourth aspect, each block EB and EB' of the hydrogenated block copolymer is derived from a polybutadiene block prior to hydrogenation, wherein after hydrogenation each block EB and EB' independently have a hydrogenation level greater than 90%.

### DETAILED DESCRIPTION

The following terms will be used throughout the specification.

"Consisting of" refers to a composition that includes only the specifically listed components and excludes other components that materially affect the technical solution or distinctive function of the invention. However, the presence of other components in small amounts that do not materially affect the technical effect of the invention is not excluded, such as trace-level stabilizers, process residues, or solvents used during preparation.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and B means A only, B only, as well as A and B.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Vinyl aromatic unit content" or VAC of a block copolymer refers to the weight % of polymerized vinyl aromatic monomers, e.g., styrene in the block copolymer, calculated by dividing the sum of molecular weight of all vinyl aromatic units by total molecular weight of the block copolymer. VAC can be determined using proton nuclear magnetic resonance (¹H NMR) and ¹³C NMR. VAC sometimes is used interchangeably with PSC, or polystyrene content.

"Butylene unit content" refers to the content, in weight %, of the butylene units ("B") in a hydrogenated block copolymer. The butylene units are obtained / formed by polymerization of 1,3-butadiene monomer via 1,2-addition, followed by hydrogenation. The 1,3-butadiene monomer can also polymerize through 1,4-addition, which upon hydrogenation results in ethylene units ("E"). Both butylene and ethylene units can be part of the hydrogenated block copolymer which can also contain vinyl aromatic units and/or ethylene-propylene units in any order. The butylene unit content can be measured by ¹H NMR and ¹³C NMR.

"Coupling efficiency (CE)" refers to the weight of coupled polymer molecules divided by the total weight of both coupled and uncoupled polymer molecules, expressed as a percentage (%). CE can be used to determine the amount of diblock content in the overall block copolymer. For example, if the coupling efficiency is 80%, the polymer will contain 20 wt.% diblock and 80 wt.% triblock and multi-arm blocks.

"Molecular weight" or number-average molecular weight (Mn) refers to the number-average molecular weight in kg/mol of a polymer block or block copolymer. Mn values can be determined using gel permeation chromatography (GPC), also referred to as size exclusion chromatography (SEC), using polybutadiene calibration standards. The chromatograph can employ a refractive index detector, an ultraviolet detector, or a combination thereof, and is calibrated using commercially available polybutadiene molecular weight standards. Molecular weights determined in this manner are polybutadiene-equivalent molecular weights.

Molecular weight values determined by GPC herein correspond to the peak molecular weight (Mp), defined as the molecular weight corresponding to the apex of the polymeric peak in the chromatogram. For block copolymers prepared by sequential polymerization, the molecular weight of an individual block can be estimated from GPC analysis by monitoring the shift in the chromatographic peak following formation of the additional block. For example, the molecular weight of block "B'" can be estimated as Mp(B-B') minus Mp(B). In embodiments, GPC can be calibrated using polybutadiene standards to provide polybutadiene-equivalent molecular weights, or using polystyrene standards, such as according to ASTM D5296, to provide styrene-equivalent molecular weights (Ms).

"Hydrogenation level" refers to the level (in percentage) of saturation of the double bonds (e.g., olefinic, aromatic, etc.) into the block copolymer, can be measured by ¹H NMR.

"Residual unsaturation" or RU refers to the levels of unsaturation, i.e., carbon-carbon double bonds per gram of a block copolymer. RU can be measured using ¹H NMR or ozonolysis titration.

"Unit" refers to the structural building block derived from one or more polymerized monomers, representing the repeating entity that forms part of the polymer or copolymer chain. Unlike a "monomer," which is the individual molecule before polymerization, a "unit" is the transformed version of the monomer after undergoing the polymerization process.

"Compatibilizer" refers to a macromolecular species (or polymer) that exhibits interfacial activity in polymer blends. Typically, the chains of the compatibilizer have a blocky structure, with one block being miscible with one component of the blend and another block being miscible with the other component. The compatibilizer can either be reactive, forming chemical links with the polymers, or non-reactive, remaining miscible without forming any chemical bonds.

"Polydispersity index" or PDI refers to a ratio of a weight average molecular weight (M_{w}) to a number average molecular weight (Mₙ), sometimes also referred to as molecular weight distribution. PDI is used to indicate distribution of polymer chain molecular weights in a given polymer. The PDI can be calculated over the total GPC, or a fraction of the GPC such as a peak between two extreme apparent molecular weight values.

"Dissolution temperature" or Ts refers to the temperature at which a polymer sample becomes clear in a non-polar solvent such as cyclohexane. Ts is determined by first dissolving the polymer in cyclohexane at 40 to 80°C, cooling the solution to 25°C and then gradually reheating while stirring. Ts is recorded as the temperature at which the polymer sample clarifies upon slow heating at a rate of 1°C/min under stirring.

The disclosure relates to a hydrogenated block copolymer containing a block EB with a low butylene (B) unit content and a block EB' with a high butylene (B') unit content, for use as a compatibilizer for blending two or more different polyolefins. The resulting polyolefin blend exhibits improved mechanical properties and processability suitable for a wide range of applications.

(Hydrogenated block Copolymer): The polymers of this invention are produced by hydrogenation of polybutadiene block copolymers in which the blocks have differing ratios of 1,2 and 1,4 repeat units. The hydrogenated block copolymer is a sequential or coupled block copolymer comprising a block EB (low 1,2 RU ratio) and a block EB' (high 1,2 RU ratio, each independently composed of, following hydrogenation, ethylene (E) units and butylene (B) units. In this case, butylene (B) units are produced by hydrogenation of 1,2 polybutadiene, sometimes referred to as vinyl, repeat units. Ethylene (E) units are produced by hydrogenation of 1,4 polybutadiene repeat units; two ethylene repeat units are produced by hydrogenation of one 1,4 butadiene repeat unit.

In embodiments, the hydrogenated block copolymer has a structure (EB-EB')ₙX, X is a residue of a coupling agent and n is an integer from 2 to 20, or 2 to 10, or 2 to 4.

In embodiments, the hydrogenated block copolymer has a structure (EB-EB')ₙX, wherein n = 2, forming a hydrogenated triblock copolymer (EB-EB'-EB).

In embodiments, the hydrogenated block copolymer further comprises a block "S" composed of vinyl aromatic units and has a structure (S-EB-EB')ₙX, X is a residue of a coupling agent and n is an integer from 2 to 20, or 2 to 10, or 2 to 4.

In embodiments, the vinyl aromatic units are derived from a polymerized vinyl aromatic monomer selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the hydrogenated block copolymer, if contains the block "S," has a vinyl aromatic unit content (VAC) of < 20, or < 15, or > 2, or 2 - 20, or 3 - 15, or 5 - 20 wt.%, based on total weight of the hydrogenated block copolymer.

In embodiments, each block "S," if present, has a molecular weight (Mₚ) of < 50, or > 2, or 2 - 50, or 3 - 30, or 5 - 15, or 4 - 12 kg/mol, measured by GPC using polystyrene calibration standard according to ASTM D5296.

In embodiments, each block "S," if present, has a hydrogenation level of < 30%, or < 20%, or < 10% or < 5%.

In embodiments, each block EB and EB' prior to hydrogenation, is a polymer block of a polybutadiene derived from 1,3-butadiene monomer. After hydrogenation, each block EB, and EB' independently has a hydrogenation level of > 90%, or > 92%, or > 95%, or > 98%, or > 99%, or up to 100%.

In embodiments, 1,3-butadiene monomer is incorporated in each block EB by 1,4 addition in an amount of at least 75, or < 94, or < 88, or 75 - 88, or 77 - 86, or 80 - 86, or 80 - 88 wt.%, based on total weight of the polymerized 1,3-butadiene monomer in the block EB, remainder being 1,2 addition.

In embodiments, block EB has a butylene ("B") unit content of 6 - 30, or 8 - 28, or 10 - 30, or 10 - 26, or 12 - 25, or 14 - 23, or 14 - 20, or 12 - 20, or 14 - 25, or > 6, or > 12, or < 25 wt.%, based on total weight of the block EB.

In embodiments, each block EB comprises 1 to 10 ethyl branches derived from hydrogenated 1,2-addition units of 1,3-butadiene per 100 backbone carbon atoms, or 1.5 - 9, or 2.0 - 8.8, or 3.5 - 7.5, or > 1.5, or < 8, measured before hydrogenation by 1H NMR.

In embodiments, each block EB' has a butylene ("B") unit content of at least 70, or > 75, or < 90, or 70 - 90, or 75 - 85, or 70 - 85, or 75 - 90 wt.%, based on total weight of the block EB'.

In embodiments, 1,3-butadiene monomer is incorporated in the block EB' by 1,2 addition in an amount of at least 70, or > 75, or < 90, or 70 - 90, or 75 - 85, or 70 - 85, or 75 - 90 wt.%, based on total weight of the polymerized 1,3-butadiene monomer in the block EB', remainder being 1,4 addition.

In embodiments, the hydrogenated block copolymer has a melting temperature (Tm) of < 110 °C or < 100°C, or < 95°C, or < 90°C, or < 80°C, or > 10°C, or 10 - 100°C, or 20 - 95°C, or 30 - 60°C, or 30 - 50°C, or 10 - 50°C, or 30 - 90°C, measured by differential scanning calorimetry (DSC) according to ASTM D3418.

In embodiments, the hydrogenated block copolymer has a crystallization temperature (T_{c}) of < 150°C, or < 130°C, or < 100°C, or > 10°C, or 10 - 150°C, or 15 - 130°C, or 20 - 110°C, or 30 - 80°C, measured by differential scanning calorimetry (DSC) according to ASTM D3418.

In embodiments, the hydrogenated block copolymer has a crystallinity (*X_{c}*) in the range of 2 - 25%, or 4 - 20%, or 5 - 15%, or 2 - 15%, or 5 - 25%, or < 40%, or < 30%, or < 25%, or > 2%, measured by differential scanning calorimetry (DSC) according to ASTM D3418.

In embodiments, the block EB' is an amorphous polymer block.

In embodiments, the hydrogenated block copolymer has a weight ratio of block EB to block EB' ranging from 5:1 to 1:1 or 4:1 to 1:1 or 1.5:1.

In embodiments, each block EB has a number average molecular weight (Mn) of > 60, or > 70, or < 95, or 50 - 120, or 55 - 110, or 60 - 100, or 65 - 95, or 50 - 95, or 65 - 120 kg/mol.

In embodiments, each block EB' has a number average molecular weight (Mn) of > 95, or < 130, or 70 - 150, or 80 - 140, or 90 - 130, or 70 - 120, or 90 - 130 kg/mol. For polymers produced by coupling, this block is defined as twice the molecular weight of the B' segment prior to coupling.

In embodiments, the hydrogenated block copolymer has a number average molecular weight (Mn) of > 120 or >150, or > 200, or > 220, or < 400, or 120 - f400, or 150 - 400, or 200 - 400, or 210 - 380, or 220 - 350, or 230 - 320, or 200 - 320, or 240 - 400 kg/mol.

In embodiments, the hydrogenated block copolymer has a polydispersity index (PDI) of > 1.2, or < 2.5.

(Preparation of Hydrogenated Block Copolymer): The hydrogenated block copolymer can be prepared by sequential (or successive) polymerization of the monomers in solution, i.e., in solvents, in the presence of an initiator / catalyst, with stepwise addition of monomers and initiator, followed by coupling of the resulting block copolymer with a coupling agent, and lastly, a hydrogenation step.

In embodiments, the hydrogenated block copolymer is prepared by first polymerization of 1,3-butadiene monomer in a mixture of a polar and a non-polar solvent in the presence of an initiator at a suitable temperature and time, e.g., 20 to 80°C for 30 minutes to 10 hours, to form a first block EB. A volume ratio of polar to non-polar solvent used for the polymerization of the first block EB can range from 1.0:1500 to 1.5:1200, or 1.3:1200 to 1.5:1000. In this reaction mixture (i.e., living polymer solution), an excess of the polar solvent is then added, followed by addition of more 1,3-butadiene monomer and the polymerization reaction is continued for another 2 to 10 hours to form a second block EB'. Finally, a coupling agent (if desired) is added to couple the diblock copolymer to form the triblock copolymer. The coupling reaction can be conducted at a temperature of 10 to 30°C for 5 to 15 hours.

In embodiments, after the sequential polymerization, the triblock copolymer is hydrogenated in the presence of a hydrogenation catalyst at a temperature of < 350°C, or < 250°C, or < 100°C, or > 50°C, and at a hydrogen pressure < 1000 psig, or 500 - 900 psig, or > 450 psig. The hydrogenation reaction can be conducted in a single solvent, and the solvent can be polar or non-polar.

Examples of polar solvents include tetrahydrofuran (THF), triethylamine (TEA), 1,4-dioxane, pyridine, tetramethylethylene diamine, diethyl ether, glyme ethers (e.g., dimethoxyethane, diglyme(bis(2-methoxyethyl) ether, etc.), and the like.

Examples of non-polar solvents include cyclohexane, n-hexane, n-heptane, n-octane, n-pentane, isopentane, and the like.

In embodiments, a modifier is used during the polymerization to control the vinyl content in the polymer to a desired level. The modifier serves to improve the efficiency of incorporation of the monomers during polymerization (e.g., 1,2 addition or 1,4 addition). Examples of modifiers include dimethyl ether, diethyl ether, ethyl methyl ether, ethyl propyl ether, diethoxy propane, 1,2-diethoxyethane, 1.2-dimethoxy-ethane, and ortho-dimethoxybenzene, etc. Amounts of the modifier used depends upon the type of the modifier, e.g., 0.5 - 20, or 1 - 15, or 1 - 10 wt.%, based on total weight of monomers to be polymerized.

Examples of catalysts / initiators for polymerization include organomonoalkali metal compounds "RM," wherein R is an alkyl, cycloalkyl, or aryl radical containing 4 to 8 carbon atoms, such as an n-butyl radical, and M is an alkali metal e.g., alkyl lithium compounds, s-butyllithium, n-butyllithium, t-butyllithium, amyllithium, di-sec-butyl lithium adduct of m-diisopropenyl benzene and the like. In embodiments, the initiator / catalyst is used in an amount of 0.002 - 5, or 0.005 - 4.5, or 0.01 - 4, or 0.015 - 3.8, or 0.02 - 3.5 wt.%, based on total weight of monomers to be polymerized.

Examples of coupling agents include: di- or multivinylarene compounds; di- or multiepoxides; di- or multiisocyanates; di- or multialkoxysilanes; di- or multiimines; di-or multialdehydes; di- or multiketones; alkoxytin compounds; di- or multihalides, e.g., silicon halides and halosilanes; mono-, di-, or multianhydrides; di- or multiesters, e.g., esters of monoalcohols with polycarboxylic acids; diesters which are esters of monohydric alcohols with dicarboxylic acids; diesters which are esters of monobasic acids with polyalcohols, e.g., glycerol; divinyl benzene; dichloroethane; dibromobutane; esters of carboxylic acids; and mixtures thereof.

In embodiments, the coupling agent is a silane compound, e.g., vinyl trimethoxy silane, vinyl triethoxy silane, vinyl tripropoxy silane, vinyl tributoxy silane, vinyl ethoxy dimethoxy silane, vinyl ethoxy dipropoxy silane, propenyl ethoxy dimethoxy silane, propenyl ethoxy dipropoxy silane, tetra-methoxysilane (TMOS), tetra-ethoxysilane (TEOS), methyltrimethoxysilane (MTMS), dichlorodimethylsilane, and mixtures thereof.

In embodiments, the coupling agent is used in amounts of 1 - 15, or 2 - 14, or 3 - 12, or 5 - 10 wt.%, based on total weight of monomers to be polymerized.

Examples of hydrogenation catalysts include transition metals, e.g., nickel, cobalt, rhodium, ruthenium, palladium, platinum, other Groups VIIIb (Group 8 - 10) metals, or mixtures thereof. The hydrogenation catalyst can be any of heterogeneous catalyst supported heterogeneous catalysts, and homogeneous catalyst. In embodiments, the hydrogenation catalyst is prepared by combining a Group VIIIb metal carboxylate or alkoxide with an alkyl or hydride of a metal selected from Groups I-A, II-A, and III-B of the Periodic Table of Elements. In embodiments, the hydrogenation catalyst is formed from a Group 8 - 10 metal compounds, e.g., palladium, nickel, cobalt, aluminum alkyl, and the like. In embodiments, the hydrogenation catalyst is formed by reacting Group VIII metal carboxylic acid salt with other metal alkyls, e.g., Li alkyls including n-butyllithium and sec-butyllithium, or metal hydrides such as lithium hydride and lithium aluminium hydride.

Examples of aluminum alkyl compounds include organo aluminum compounds of formula RₙAlX₃₋ₙ, wherein R is a hydrocarbon group of C₁-C₁₀ or C₂-C₈, X is hydrogen or R2, wherein R2 is a hydrocarbon group of C₁-C₁₀, which is different from R, and n is 1, 2, or 3. In embodiments, the aluminum alkyl compound is trialkylaluminum compound. In embodiments, the aluminum alkyl compound has a molar ratio of aluminum to cobalt of 1:1 to 20:1, or 1:1 to 5 :1 or 1:1 to 2:1.

Examples of nickel or cobalt compounds which can be soluble, include nickel carboxylates such as nickel octanoate, nickel stearate, nickel decanoate, nickel acetylacetanoate, nickel naphthenate, nickel octoate; and cobalt carboxylates such as cobalt stearate, cobalt octanoate, and cobalt versatate. In embodiments, the hydrogenation catalyst is a Wilkinson's catalyst (e.g., chloridotris(triphenylphosphine)-rhodium(I)).

(Properties of Hydrogenated Block Copolymer): The hydrogenated block copolymer exhibits improved processability compared to conventional hydrogenated polybutadiene-derived compatibilizers. In particular, the microstructure of the EB block and EB' block, including the butylene unit content and branching level derived from 1,2-addition of 1,3-butadiene, reduces crystallinity of the polymer and lowers the temperature required for dissolution in non-polar solvents. The lower dissolution temperature facilitates processing steps such as hydrogenation, solution handling, and characterization at reduced temperatures.

In embodiments, the hydrogenated block copolymer has a dissolution temperature (Ts) in cyclohexane of < 70°C, or < 65°C, < 60°C, or < 50°C, or < 45°C, or < 40°C, or > 2°C, or 2 - 60°C, or 5 - 50°C, or 2-50°C or 5 - 40°C.

The dissolution temperature (Ts) can decrease with increasing branching content or increasing butylene unit content in the EB block, which reduces crystallinity and improves solubility in non-polar solvents such as cyclohexane. In certain embodiments, the hydrogenated block copolymer dissolves at temperatures close to ambient temperature.

(End-Use Applications): The hydrogenated block copolymer can be used in many applications, particularly in applications for compatibilizing blends of different polyolefins including recycled materials.

In embodiments, a polyolefin blend composition comprises 90 to 99.5 wt.% of a blend of polyethylene (PE) and isotactic polypropylene (iPP); 0.5 to 10 wt.% of a hydrogenated block copolymer; and up to 10 wt.% additives, based on total weight of the polyolefin blend composition. Polyolefins can be virgin, a post-consumer recycle (PCR), post-industrial recycled (PIR) material, or mixtures thereof. In embodiments, the blend has a weight ratio of PE to iPP ranging from 1:10 to 10:1, or 1:8 to 8:1, or 1:5 to 5:1, or 1:3 to 3:1.

In embodiments, the polyolefin blend composition comprises 0.5 - 10, or 1 - 10, or 1 - 8, or 0.5 - 5, wt.% of the hydrogenated block copolymer and rest is a combination of PE and iPP in a weight ratio of 1:10 to 10:1, based on total weight of the polyolefin blend composition.

Examples of PE for use in the polyolefin blend composition include low density polyethylene (LDPE), linear low-density polyethylene (LLDPE), very low-density polyethylene (VLDPE), high density polyethylene (HDPE), medium density polyethylene (MDPE), high molecular weight polyethylene (HMWPE), ultra-high molecular weight polyethylene (UHMWPE), and mixtures thereof. In embodiments, the PE is a HDPE.

In addition to or instead of iPP, other polypropylene (PP) can be used in the polyolefin blend composition. In embodiments, the PP is a heterophasic polymer composition comprising a propylene homopolymer matrix or random copolymer matrix within which a propylene copolymer component is dispersed. This polypropylene copolymer contains one or more comonomers selected from ethylene or higher alpha-olefins. In embodiments, the random copolymer matrix comprises propylene monomer and at least one comonomer selected from group consisting of ethylene, C₄-C₈ alpha-olefins, e.g., 1-butene, 1-pentene, 4-methyl-1-pentene, 1-hexene, 1-heptene, 1-octene, and mixtures thereof. In embodiments, PP is a blend of polypropylene with a random copolymer of ethylene and/or butene, or a crystalline random copolymer of ethylene and propylene combined with a rubbery ethylene-propylene copolymer. Copolymers of polypropylene can also be used, including copolymers of propylene with copolymerizable comonomers, e.g., ethylene, 1-butene, 1-pentene, 1-hexene, 1-octene, or one or more conjugated or non-conjugated dienes. In embodiments, PP is a polypropylene homopolymer.

In embodiments, the polyolefin blend composition further comprises at least an additive selected from activators, curing agents, stabilizers, thickeners, coalescing agents, slip agents, release agents, antimicrobial agents, surfactants, antioxidants, antiozonants, color change pH indicators, plasticizers, tackifiers, film forming additives, dyes, pigments, UV stabilizers, UV absorbers, catalysts, fillers, other resins, flame retardants, viscosity modifiers, wetting agents, deaerators, toughening agents, adhesion promoters, heat stabilizers, lubricants, flow modifiers, drip retardants, antistatic agents, processing aids, stress-relief additives, blowing agents, foam nucleating agents, weld line strength promoter, and mixtures thereof.

In embodiments, additive if added, is in amounts of up to 10, or 0.5 - 10, or 1 - 8, or 1 - 5, or > 1, or < 7 wt.%, based on total weight of the polyolefin blend composition.

(Preparation of Polyolefin Blend Compositions): The polyolefin blend composition can be prepared by mixing all the components in any order, or simultaneously, by standard process and equipment, e.g., dry blending, compounding, etc., prior to forming the articles. Articles can be made by any of injection blow molding, injection molding, extrusion blow molding, coextrusion molding, cast film extrusion, blown film extrusion, injection stretch blow molding, rotational molding, thermoforming, thermofusion, foam blow molding, pultrusion, calendaring, additive manufacturing, or other known processing methods.

In embodiments, the polyolefin blend composition is prepared by compounding the components in an extruder at a temperature of 150 - 250°C, or 160 - 220°C for 2 - 60 minutes. The resulting polyolefin blend composition is then used to prepare sample specimens by molding at a temperature of 160 - 240°C.

Examples of articles made from the polyolefin blend composition include bottles, containers, fuel tanks, drums, furniture, signage, wheels, toys, gardening products, and the like. The polyolefin blend composition can also be used in many other applications, e.g., piping, packaging applications, automotives, films, geo-membranes, roofings, pond liners, caps, and closures as well as core layers of a multilayer polyolefin sheet or film, containers, household articles, insulating layer in power cables, etc.

(Properties of Polyolefin Blend Compositions): The polyolefin blend composition containing the hydrogenated block copolymer shows improved mechanical properties, processability, and better thermal properties, compared to blends without the hydrogenated block copolymer.

In embodiments, a polyolefin blend composition comprises 90 to 99.5 wt.% of a blend of polyethylene (PE) and isotactic polypropylene (iPP); 0.5 to 10 wt.% of a hydrogenated block copolymer; and up to 10 wt.% additives, has at least one of:

Young's modulus of > 1, or < 10, or 1 - 10, or 1 - 5, or 1 - 3 GPa, measured according to ASTM D638.

Stress at yield of > 22, or < 60, or 20 - 60, or 22 - 55, or 24 - 50, or 20 - 40 MPa, measured according to ASTM D638.

Strain at break of > 150%, or < 1000%, or 150 - 1000%, or 180 - 900%, or 200 - 850%, measured according to ASTM D638.

Stress at break of > 20, or < 60, or 20 - 60, or 22 - 55, or 24 - 50, or 20 - 45 MPa, measured according to ASTM D638.

(Analytical Methods): The number average molecular weight (Mn) of the hydrogenated block copolymer can be determined by gel permeation chromatography (GPC) using polybutadiene standards to provide polybutadiene-equivalent molecular weights.

The butylene unit content in the EB and EB' blocks can be determined using nuclear magnetic resonance (NMR) spectroscopy, such as proton (¹H) NMR and/or carbon (¹³C) NMR. The butylene units correspond to structural units formed from 1,2-addition of 1,3-butadiene followed by hydrogenation, which produces ethyl side branches along the polymer backbone. The butylene unit content can be calculated by integrating signals corresponding to the ethyl branch groups relative to signals corresponding to the polymer backbone. The reported values can be expressed as weight percent of butylene units relative to the total weight of the polymer block.

The number of ethyl branches in the EB block can be determined using nuclear magnetic resonance spectroscopy, such as ¹H NMR or ¹³C NMR. In hydrogenated polybutadiene-derived polymers, ethyl branches arise from 1,2-addition of 1,3-butadiene followed by hydrogenation. These branches produce characteristic methyl and methylene signals that can be distinguished from the signals of the main polymer backbone. The number of ethyl branches can be quantified by integrating signals corresponding to the terminal methyl groups of the ethyl branches relative to signals corresponding to backbone methylene carbons or protons. From these integrations, the number of ethyl branches per 100 backbone carbon atoms can be calculated. In certain embodiments, the EB block contains from 1 to 10 ethyl branches per 100 backbone carbon atoms.

Hydrogenation level of the block copolymer can be determined by ¹H NMR spectroscopy by evaluating the reduction or absence of olefinic proton signals relative to saturated backbone signals. In certain embodiments, the hydrogenation level corresponds to the percentage of unsaturated carbon-carbon bonds converted to saturated bonds during hydrogenation.

Melting temperature (Tm) of the hydrogenated block copolymer can be determined by differential scanning calorimetry (DSC) according to ASTM D3418. In certain embodiments, a polymer sample is heated to a temperature above the melting transition, cooled to a temperature below the crystallization temperature, and then reheated at a controlled heating rate. The melting temperature can be recorded as the peak temperature of the melting endotherm observed during the heating cycle.

Dissolution temperature (Ts) of the hydrogenated block copolymer can be determined using a cyclohexane dissolution test. In this test, a polymer sample is first dissolved in cyclohexane at an elevated temperature sufficient to obtain a homogeneous solution. The solution is then cooled to approximately 25 °C and subsequently reheated while stirring at a controlled rate of about 1 °C per minute. The dissolution temperature (Ts) is recorded as the temperature at which the polymer solution becomes visually clear during the reheating step.

(Examples): The following examples are intended to be non-limiting.

The components used in examples include:

HDPE-1 is polyethylene having Mn of 22 kg/mol, PDI of 3.8, MFI of 4.4 g/10 min at 190°C/2.16 kg, density of 0.952 g/cm³, melting temperature of 131°C, from Dow Chemical.

PP-1 is polypropylene having Mn of 162 kg/mol, PDI of 2.2, MFI of 1.8 g/10 min at 230°C/2.16 kg, density of 0.905 g/cm³, melting temperature of 162°C, from TotalEnergies.

(Example 1 - Preparation of hydrogenated block copolymer). 1,3-butadiene monomer was polymerized with sec-butyllithium (Li) catalyst in mixture of THF and cyclohexane solvents (with a volume ratio of 1.8:1000) at 40°C for 8 hours to obtain first block EB. Excess THF was then added to the living polymer solution to have a molar concentration of [THF] : [Li] = 200:1, followed by the addition of more 1,3-butadiene monomer and the reaction was continued for another 8 hours to form second block EB'. After complete conversion of monomer to polymer, dichlorodimethylsilane was added at a weight ratio of dichlorodimethylsilane to Li of 1:2 to couple the living diblock copolymer at 20°C for 10 hours, resulting in a triblock copolymer. Hydrogenation of the triblock copolymer was carried out with hydrogen gas (500 psi pressure) at 100°C for 12 hours using chloridotris(triphenylphosphine)-rhodium(I) catalyst in combination with triphenylphosphine in toluene, producing hydrogenated triblock copolymer having structure EB-EB'-EB. Various hydrogenated triblock copolymers were prepared, and details are shown in tables 1 and 2. Some examples illustrate EB blocks outside the preferred range and are included to demonstrate the influence of EB block microstructure on polymer properties

**Table 1**

| Examples | Butylene unit ("B") content (wt.%) in EB block | Butylene unit ("B") content (wt.%) in EB' block | Mn of block EB (kg/mol) | Mn of block EB' (kg/mol) | Mn of triblock copolymer (kg/mol) | EB block ethyl side chains per 100 carbon backbone atoms |
|---|---|---|---|---|---|---|
| Ex-1a | 6 | 82 | 74 | 93 | 242 | 1.7 |
| Ex-1b | 10 | 83 | 63 | 76 | 202 | 2.5 |
| Ex-1c | 11 | 81 | 82 | 109 | 274 | 2.9 |
| Ex-1d | 14 | 78 | 82 | 105 | 269 | 3.8 |
| Ex-1e | 23 | 80 | 75 | 104 | 253 | 6.5 |
| Ex-1f | 30 | 76 | 76 | 104 | 256 | 8.8 |

**Table 2**

| Examples | PDI | Tm (°C) | Tc (°C) | X_{c}(%) | Ts (°C) |
|---|---|---|---|---|---|
| Ex-1a | 1.22 | 105 | 91 | 27 | 60 |
| Ex-1b | 1.25 | 97 | 82 | 22 | 47 |
| Ex-1c | 1.21 | 93 | 78 | 20 | 40 |
| Ex-1d | 1.25 | 85 | 68 | 15 | 35 |
| Ex-1e | 1.24 | 61 | 40 | 12 | < 25 |
| Ex-1f | 1.21 | 40 | 21 | 5 | - |

(Examples 2 to 3 - Preparation of polyolefin blend compositions). The components of the compositions were compounded at 190°C for 12 minutes using a twin-screw microcompounder. The resulting material was then molded into 0.5 mm thick film samples at 180°C and cooled to an ambient temperature (25°C). The composition details are presented in tables 3 and 4, while the properties are shown in tables 5 and 6.

**Table 3**

| Examples | HDPE-1/ PP-1 (70/30) (wt.%) | Ex-1a (wt.%) | Ex-1b (wt.%) | Ex-1c (wt.%) | Ex-1d (wt.%) | Ex-1e (wt.%) | Ex-1f (wt.%) |
|---|---|---|---|---|---|---|---|
| C.Ex-1 | 100 | - | - | - | - | - | - |
| Ex-2a | 99 | 1 | - | - | - | - | - |
| Ex-2b | 97 | 3 | - | - | - | - | - |
| Ex-2c | 95 | 5 | - | - | - | - | - |
| Ex-2d | 99 | - | 1 | - | - | - | - |
| Ex-2e | 97 | - | 3 | - | - | - | - |
| Ex-2f | 95 | - | 5 | - | - | - | - |
| Ex-2g | 99 | - | - | 1 | - | - | - |
| Ex-2h | 97 | - | - | 3 | - | - | - |
| Ex-2i | 95 | - | - | 5 | - | - | - |
| Ex-2j | 99 | - | - | - | 1 | - | - |
| Ex-2k | 97 | - | - | - | 3 | - | - |
| Ex-2l | 95 | - | - | - | 5 | - | - |
| Ex-2m | 99 | - | - | - | - | 1 | - |
| Ex-2n | 97 | - | - | - | - | 3 | - |
| Ex-2o | 95 | - | - | - | - | 5 | - |
| Ex-2p | 99 | - | - | - | - | - | 1 |
| Ex-2q | 97 | - | - | - | - | - | 3 |
| Ex-2r | 95 | - | - | - | - | - | 5 |

**Table 4**

| Examples | HDPE-1/ PP-1 (30/70) (wt.%) | Ex-1a (wt.%) | Ex-1b (wt.%) | Ex-1c (wt.%) | Ex-1d (wt.%) | Ex-1e (wt.%) | Ex-1f (wt.%) |
|---|---|---|---|---|---|---|---|
| C.Ex-2 | 100 | - | - | - | - | - | - |
| Ex-3a | 99 | 1 | - | - | - | - | - |
| Ex-3b | 97 | 3 | - | - | - | - | - |
| Ex-3c | 95 | 5 | - | - | - | - | - |
| Ex-3d | 99 | - | 1 | - | - | - | - |
| Ex-3e | 97 | - | 3 | - | - | - | - |
| Ex-3f | 95 | - | 5 | - | - | - | - |
| Ex-3g | 99 | - | - | 1 | - | - | - |
| Ex-3h | 97 | - | - | 3 | - | - | - |
| Ex-3i | 95 | - | - | 5 | - | - | - |
| Ex-3j | 99 | - | - | - | 1 | - | - |
| Ex-3k | 97 | - | - | - | 3 | - | - |
| Ex-3l | 95 | - | - | - | 5 | - | - |
| Ex-3m | 99 | - | - | - | - | 1 | - |
| Ex-3n | 97 | - | - | - | - | 3 | - |
| Ex-3o | 95 | - | - | - | - | 5 | - |
| Ex-3p | 99 | - | - | - | - | - | 1 |
| Ex-3q | 97 | - | - | - | - | - | 3 |
| Ex-3r | 95 | - | - | - | - | - | 5 |

**Table 5**

| Examples | Young's modulus (GPa) [*E*] | Stress at yield (MPa) [σ_{y}] | Strain at break (%) [*ε*_{b}] | Stress at break (MPa) [σ_{b}] |
|---|---|---|---|---|
| C.Ex-1 | 1.30 | 28.5 | 7 | 27.9 |
| Ex-2a | 1.27 | 26.7 | 464 | 21.7 |
| Ex-2b | 1.29 | 26.2 | 696 | 29.6 |
| Ex-2c | 1.22 | 25.5 | 746 | 31.9 |
| Ex-2d | 1.26 | 27.7 | 421 | 21.3 |
| Ex-2e | 1.23 | 26.3 | 663 | 28.6 |
| Ex-2f | 1.12 | 25.3 | 724 | 30.3 |
| Ex-2g | 1.33 | 26.9 | 389 | 21.0 |
| Ex-2h | 1.29 | 25.6 | 616 | 26.9 |
| Ex-2i | 1.17 | 24.2 | 669 | 28.6 |
| Ex-2j | 1.31 | 26.8 | 516 | 23.3 |
| Ex-2k | 1.26 | 24.8 | 717 | 29.4 |
| Ex-2l | 1.16 | 23.9 | 759 | 31.0 |
| Ex-2m | 1.44 | 27.9 | 392 | 21.8 |
| Ex-2n | 1.32 | 25.3 | 722 | 30.9 |
| Ex-2o | 1.19 | 23.4 | 752 | 31.9 |
| Ex-2p | 1.32 | 26.7 | 241 | 20.2 |
| Ex-2q | 1.24 | 25.2 | 596 | 26.7 |
| Ex-2r | 1.09 | 22.8 | 629 | 27.8 |

**Table 6**

| Examples | Young's modulus (GPa) [*E*] | Stress at yield (MPa) [σ_{y}] | Strain at break (%) [*ε*_{b}] | Stress at break (MPa) [σ_{b}] |
|---|---|---|---|---|
| C.Ex-2 | 1.44 | 33.0 | 15 | 26.4 |
| Ex-3a | 1.50 | 32.8 | 479 | 30.7 |
| Ex-3b | 1.43 | 32.0 | 668 | 39.1 |
| Ex-3c | 1.37 | 30.8 | 707 | 42.5 |
| Ex-3d | 1.37 | 32.3 | 412 | 29.9 |
| Ex-3e | 1.41 | 31.4 | 653 | 37.1 |
| Ex-3f | 1.37 | 30.7 | 644 | 38.6 |
| Ex-3g | 1.57 | 32.6 | 393 | 27.9 |
| Ex-3h | 1.46 | 31.1 | 664 | 38.6 |
| Ex-3i | 1.31 | 29.3 | 754 | 41.5 |
| Ex-3j | 1.49 | 31.8 | 519 | 32.5 |
| Ex-3k | 1.44 | 31.0 | 624 | 37.2 |
| Ex-3l | 1.31 | 29.2 | 748 | 43.1 |
| Ex-3m | 1.59 | 32.4 | 413 | 29.2 |
| Ex-3n | 1.38 | 29.5 | 512 | 32.1 |
| Ex-3o | 1.28 | 28.0 | 637 | 38.3 |
| Ex-3p | 1.52 | 32.1 | 247 | 26.0 |
| Ex-3q | 1.35 | 29.7 | 420 | 28.9 |
| Ex-3r | 1.28 | 28.2 | 352 | 27.5 |

## Claims

1. A hydrogenated block copolymer represented by a structure (EB-EB')ₙX, wherein:
X is a residue of a coupling agent,
n is an integer from 2 to 20, and
each block EB and EB' independently consists essentially of ethylene units and butylene units;
wherein
block EB contains 1-10 ethyl branches derived from hydrogenated 1,2-addition units of butadiene per 100 backbone carbon atoms,
block EB has a butylene unit content of 10 to 30 wt.%, and
block EB' has a butylene unit content of at least 70 wt.%;
wherein the hydrogenated block copolymer has:
a number average molecular weight (Mn) of 150 - 400 kg/mol, as determined by gel permeation chromatography (GPC) calibrated with polybutadiene standards;
a melting temperature (Tm) of < 110°C, in accordance with ASTM D3418; and
a dissolution temperature (Ts) of < 70°C.

2. The hydrogenated block copolymer of claim 1, wherein the block EB has a butylene ("B") unit content of 12 to 20 wt.%.

3. The hydrogenated block copolymer of any of claims 1-2, wherein n = 2.

4. The hydrogenated block copolymer of any of claims 1-2, wherein the hydrogenated block copolymer has a weight ratio of block EB to block EB' ranging from 5:1 to 1:1.

5. The hydrogenated block copolymer of any of claims 1-2, wherein each block EB and EB' prior to hydrogenation is a polymer block of a polybutadiene; and wherein, after hydrogenation, each block EB and EB' independently has a hydrogenation level of > 90%.

6. The hydrogenated block copolymer of any of claims 1-2, wherein the block EB' has a butylene ("B") unit content of 70 to 90 wt.%.

7. The hydrogenated block copolymer of any of claims 1-2, wherein the hydrogenated block copolymer further comprises a block S composed of vinyl aromatic units, such that the hydrogenated block copolymer has a structure (S-EB-EB')ₙX.

8. The hydrogenated block copolymer of claim 7, wherein the vinyl aromatic units are derived from a polymerized vinyl aromatic monomer selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

9. The hydrogenated block copolymer of any of claims 1-2, wherein the hydrogenated block copolymer has one or more of the following properties:
a melting temperature (Tm) of < 100°C;
a crystallization temperature (T_{c}) of < 150°C; and
a crystallinity (*X_{c}*) of 2 to 25%.

10. The hydrogenated block copolymer of any of claims 1-2, wherein the hydrogenated block copolymer has a number average molecular weight (Mn) of 200 to 400 kg/mol.

11. The hydrogenated block copolymer of any of claims 1-2, wherein the hydrogenated block copolymer has a dissolution temperature (Ts) of 2 to 50°C.

12. The hydrogenated block copolymer of any of claims 1-2, wherein the block EB' is an amorphous polymer block.

13. The hydrogenated block copolymer of any of claims 1-2, wherein:
each block EB has a number average molecular weight (Mn) of > 60 kg/mol, and
each block EB' has a number average molecular weight (Mn) of > 95 kg/mol.

14. A polyolefin blend composition comprising:
(a) 90 to 99.5 wt.% of a blend of a polyethylene and an isotactic polypropylene;
(b) 0.5 to 10 wt.% of the hydrogenated block copolymer of any of claims 1-13; and
(c) up to 10 wt.% additives,
based on total weight of the polyolefin blend composition.

15. The polyolefin blend composition of claim 14, wherein the blend has a weight ratio of the polyethylene to the isotactic polypropylene ranging from 1:10 to 10:1.
